# EUROPEAN PATENT APPLICATION

(11) **EP 4 310 869 A1**
(43) Date of publication of application: **24.01.2024**
(21) Application number: 22771481.3
(22) Date of filing: 16.03.2022
(51) Int. Cl.: H01F 5/06, H01B 7/02

(54) **LAYERED BODY OF CONDUCTOR AND INSULATION FILM, COIL, AND ROTARY ELECTRIC MACHINE**

(30) Priority: 19.03.2021 JP 2021046135
(71) Applicant: Hide Technology, LLC, Hitachi-shi, Ibaraki, 319-1308 (JP); Sumitomo Seika Chemicals Co., Ltd., Kako-gun, Hyogo 675-0145 (JP)
(72) Inventor: KIKUCHI, Hideyuki, Hitachi-shi, Ibaraki 319-1308 (JP)
(74) Representative: Mewburn Ellis LLP
(86) International application number: PCT/JP2022/012029
(87) International publication number: WO 2022/196736

(57) **Abstract**

Provided is a layered body that has excellent partial discharge resistant properties. The layered body comprises, at least: a conductor; and an insulation film formed on the conductor. The insulation film includes, at least, a first insulation layer and a second insulation layer in this order from the conductor side. The first insulation layer is formed of a resin composition containing a metal oxide, and the second insulation layer is formed of a resin composition containing a metal oxide hydrate.

## Description

### TECHNICAL FIELD

The present invention relates to a laminate of a conductor and an insulating coating, a coil, and a rotary electric machine.

### BACKGROUND ART

Insulated electric wires for use in electrical apparatuses such as a motor include an insulated electric wire obtained by applying an insulating paint to the surface of a conductor and baking the conductor to form an insulating layer, the insulating paint being obtained by dissolving in an organic solvent a resin such as a polyimide and a polyamide-imide or a resin precursor; and an insulated electric wire obtained by winding around a conductor an insulating film such as a polyimide film and mica tape to form an insulating layer (so-called tape wrapping).

In electrical apparatuses having a high operating voltage, for example, a motor used at a high voltage, a high voltage is applied to an insulated electric wire forming a coil. When a small air gap is present between adjacent insulated electric wires or in an insulating coating, an electric field is sometimes concentrated at that part, generating partial discharge. The problem with this partial discharge is that the insulating coating is degraded, causing a premature insulation breakdown on the coil and thus damaging the electrical apparatus.

Recently, even apparatuses categorized as having a low-voltage-driven system, in which a motor or the like is driven by an inverter used for energy conservation or variable speed, have an increasing number of cases where steep overvoltage (so-called an inverter surge) is repetitively generated in drive voltage in a very short period, causing an insulation breakdown. This insulation breakdown attributes to partial discharge caused by the overvoltage repetitively generated due to the inverter surge.

Methods for improving the electrical insulation lifetime against this partial discharge have been disclosed, such as a method for filling with a nano-sized metal-oxide fine particle sol such as an organosilica sol and an organoboehmite sol to prevent the insulation breakdown attributed to the partial discharge (for example, see Patent Documents 1 and 2).

### PRIOR ART DOCUMENTS

### PATENT DOCUMENTS

Patent Document 1: Japanese Patent No. 3496636
Patent Document 2: Japanese Patent No. 6567797

### SUMMARY OF THE INVENTION

### PROBLEMS TO BE SOLVED BY THE INVENTION

A main object of the present invention is to provide a laminate of a conductor and an insulating coating, the laminate having excellent partial discharge resistance. Another object of the present invention is to provide a coil using the laminate as an insulated electric wire, and a rotary electric machine.

### MEANS FOR SOLVING THE PROBLEMS

The inventors of the present invention have conducted earnest studies to achieve the objects. As a result of the studies, the inventors of the present invention have found that a laminate exhibits excellent partial discharge resistance, the laminate including at least a conductor and an insulating coating formed on the conductor, the insulating coating including at least a first insulating layer and a second insulating layer in this order from a conductor side, the first insulating layer being formed of a resin composition containing a metal oxide, and the second insulating layer being formed of a resin composition containing a metal oxide hydrate.

That is, the present invention provides an invention including the following configurations.
Item 1. A laminate including: at least a conductor; and an insulating coating formed on the conductor,
   the insulating coating including at least a first insulating layer and a second insulating layer in this order from a conductor side,
   the first insulating layer being formed of a resin composition containing a metal oxide, and
   the second insulating layer being formed of a resin composition containing a metal oxide hydrate.
Item 2. The laminate according to item 1, wherein the metal oxide hydrate contains hydrated alumina.
Item 3. The laminate according to item 1 or 2, wherein the first insulating layer and the second insulating layer are in contact with each other.
Item. 4 The laminate according to any one of items 1 to 3, wherein a resin contained in the resin composition forming the first insulating layer is at least one selected from the group consisting of a formal resin, polyurethane, an epoxy resin, polyester, polyester imide, polyether imide, a polyamide-imide, a polyimide, and precursors thereof.
Item. 5 The laminate according to any one of items 1 to 4, wherein a resin contained in the resin composition forming the second insulating layer is at least one selected from the group consisting of a formal resin, polyurethane, an epoxy resin, polyester, polyester imide, polyether imide, a polyamide-imide, a polyimide, and precursors thereof.
Item 6. The laminate according to any one of items 1 to 5, wherein the insulating coating further includes an organic insulating layer.
Item 7. The laminate according to any one of items 1 to 6, being in a form of an insulated electric wire or a film.
Item 8. A coil including the insulated electric wire according to item 7.
Item 9. A rotary electric machine including the insulated electric wire according to item 7.

### ADVANTAGES OF THE INVENTION

The present invention can provide a laminate of a conductor and an insulating coating, the laminate having excellent partial discharge resistance. The present invention can also provide a coil using the laminate as an insulated electric wire, a rotary electric machine, and an insulating paint for forming the laminate.

### BRIEF DESCRIPTION OF THE DRAWINGS

Fig. 1 is a schematic sectional view showing an example of a laminate according to an embodiment of the present invention.
Fig. 2 is a schematic sectional view showing an example of an insulated electric wire according to the embodiment of the present invention.
Fig. 3 is a schematic sectional view showing another example of the insulated electric wire according to the embodiment of the present invention.
Fig. 4 is a schematic sectional view showing another example of the insulated electric wire according to the embodiment of the present invention.
Fig. 5 is a schematic sectional view showing another example of the insulated electric wire according to the embodiment of the present invention.
Fig. 6 is a schematic sectional view showing another example of the insulated electric wire according to the embodiment of the present invention.

### EMBODIMENT OF THE INVENTION

Hereinafter, a laminate, a coil, and a rotary electric machine according to the present invention are described in detail. In the present description, numerical values connected by "to" mean a numerical value range including the numerical values before and after "to" as the lower limit value and the upper limit value. When a plurality of lower limit values and a plurality of upper limit values are separately described, any lower limit and upper limit values can be selected and connected by "to".

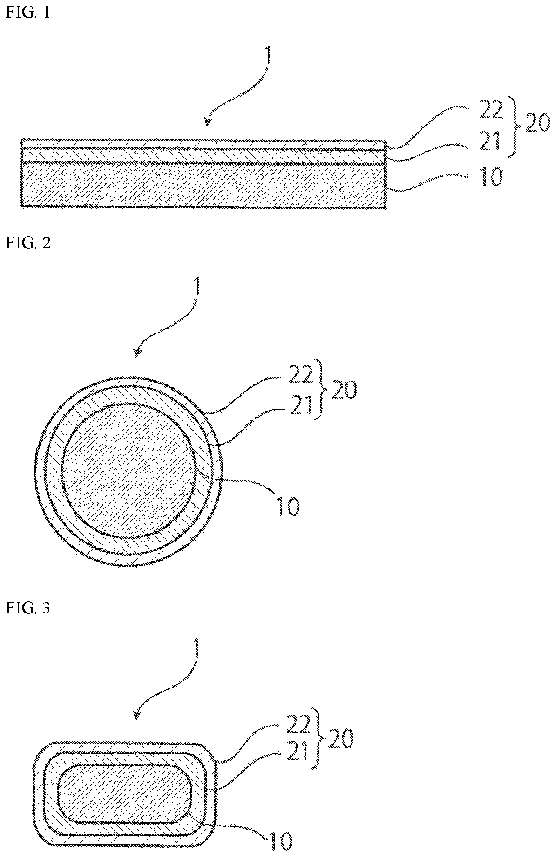

The laminate according to the present invention is a laminate including a conductor and an insulating coating formed on the conductor. In the laminate according to the present invention, the insulating coating includes at least a first insulating layer and a second insulating layer in this order from a conductor side and is characterized in that the first insulating layer is formed of a resin composition containing a metal oxide, and the second insulating layer is formed of a resin composition containing a metal oxide hydrate. The laminate according to the present invention has the configuration described above and can thereby exhibit excellent partial discharge resistance. Hereinafter, the laminate according to the present invention is described in detail with reference to Figs. 1 to 6.

In the present invention, the "inverter surge" means steep overvoltage generated by switching of an inverter and superimposed on drive voltage. The switching frequency of an inverter ranges from a relatively low rate of about 1 kHz to a high rate of up to 100 kHz; hence, the frequency of generation of the inverter surge is similarly very high, as high as from about 1 kHz to 100 kHz. The voltage of the inverter surge ranges from a voltage of about 600 V when superimposed on a drive voltage of 400 V of industrial inverter motors, to a voltage of about 3 kV when superimposed on operating voltage of high-voltage-driven inverter motors.

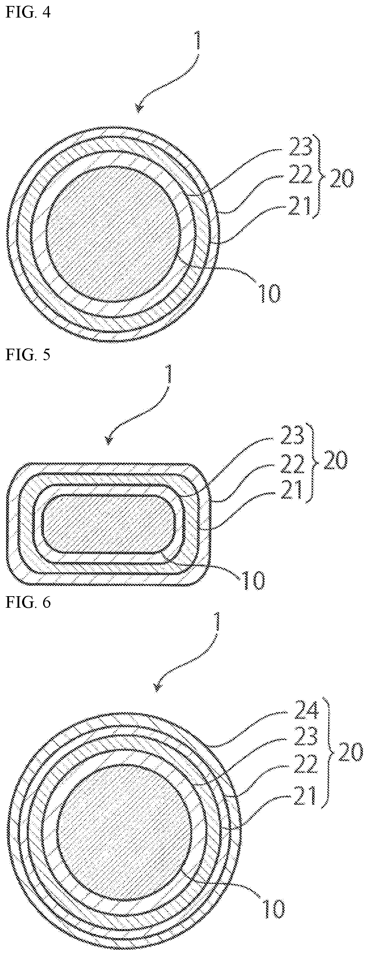

The form of a laminate 1 according to the present invention is not particularly limited as long as it is a laminate of a conductor 10 and an insulating coating 20. As shown in, for example, Fig. 1, the laminate 1 according to the present invention may be in the form of a film including at least the conductor 10 and the insulating coating 20 layered on the conductor 10. Alternatively, as shown in, for example, Figs. 2 to 6, the laminate 1 according to the present invention may be in the form of an insulated electric wire including the conductor 10 as a center portion, and the insulating coating 20 formed around the conductor 10. When the laminate 1 according to the present invention is in the form of an insulated electric wire, the sectional shape thereof is not particularly limited and examples of the sectional shape include a circular shape, an ellipse, and a polygon (may be rectangular or deformed). Figs. 2, 4, and 6 show insulated electric wires having a circular section. Figs. 3 and 5 show insulated electric wires having a substantially tetragonal section. When the sectional shape of the conductor 10 is circular, the diameter thereof is, for example, about 0.03 to 4.0 mm.

As shown in the schematic views of Figs. 1 to 6, the insulating coating 20 includes, in the order from the conductor-10 side, at least a first insulating layer 21 formed of a resin composition containing a metal oxide, and a second insulating layer 22 formed of a resin composition containing a metal oxide hydrate.

From the viewpoint of the laminate further suitably exhibiting the effects of the present invention, the first insulating layer 21 positioned on the conductor-10 side is, in the laminate 1 according to the present invention, preferred to be in contact with the second insulating layer 22 positioned on the surface side. However, for the purpose of, for example, improving adhesiveness between the first insulating layer 21 and the second insulating layer 22, another insulating layer may be disposed therebetween.

The insulating coating 20 may be formed only of the first insulating layer 21 and the second insulating layer 22 or may further include another layer. The other layer is not particularly limited as long as it is an insulating layer, and examples of the other layer include an organic insulating layer. The organic insulating layer is an insulating layer, and means a layer containing substantially no inorganic material and formed of an organic material, and specific examples of the organic insulating layer include a layer formed of a heat resistant resin described later.

Figs. 4 and 5 show aspects in which an organic insulating layer is included as a third insulating layer 23 between the conductor 10 and the first insulating layer 21. Fig. 6 shows an aspect in which an organic insulating layer is included as the third insulating layer 23 between the conductor 10 and the first insulating layer 21, and an organic insulating layer is included as a fourth insulating layer 24 on the outside of the second insulating layer 22 (opposite from the conductor-10 side). When the third insulating layer 23 is included between the conductor 10 and the first insulating layer 21, the third insulating layer 23 may be formed of the same resin composition as or a different resin composition from that of the first insulating layer 21 or the second insulating layer 22. When the fourth insulating layer 24 is included on the outside of the second insulating layer 22 (opposite from the conductor-10 side), the fourth insulating layer 24 may be formed of the same resin composition as or a different resin composition from that of the first insulating layer 21 or the second insulating layer 22. When the third insulating layer 23 and the fourth insulating layer 24 are included, the third insulating layer 23 and the fourth insulating layer 24 may be formed of the same resin composition or different resin compositions.

Between the surface of the conductor 10 and the insulating coating may be included a plating layer or the like made from a different metal from that of the conductor 10.

The material for forming the conductor 10 is not particularly limited as long as it is a conductive material, and examples of the material include copper (such as low-oxygen copper, non-oxygen copper, and a copper alloy) and metals such as aluminum, silver, nickel, and iron. The material for forming the conductor 10 can appropriately be selected according to the use of the present invention.

The first insulating layer 21 is formed of a resin composition containing a metal oxide. From the viewpoint of the laminate suitably exhibiting the effects of the present invention, the metal oxide is preferably silica, titania, alumina, magnesia, or the like, more preferably silica. The metal oxide contained in the first insulating layer 21 may be one kind of metal oxide or two or more kinds of metal oxides.

The metal oxide is preferably in the form of particles, and the particle size of the metal oxide particles is preferably 100 nm or less, more preferably 50 nm or less, further preferably 20 nm or less. The lower limit of the particle size of the metal oxide particles is, for example, 1 nm or more. Preferable ranges of the particle size of the metal oxide particles include 1 to 100 nm, 1 to 50 nm, and 1 to 20 nm.

A resin contained in the resin composition forming the first insulating layer 21 is preferably a heat resistant resin. That is, the first insulating layer 21 is suitably formed by applying and baking an insulating paint (the resin composition containing a metal oxide) used for forming the first insulating layer 21, and therefore the resin is desired to have excellent heat resistance. Any resin having excellent heat resistance may be used as the heat resistant resin, and a known resin used in a known insulated electric wire and the like can be used. Specific examples of the heat resistant resin include a formal resin, polyurethane, an epoxy resin, polyester, a polyamide, polyester imide, polyether imide, a polyamide-imide, a polyimide, and precursors thereof. Among these examples, polyester imide, a polyamide-imide, or a polyimide is preferably used from the viewpoint of further increasing the heat resistance. The resin contained in the first insulating layer 21 may be one kind of resin or two or more kinds of resins.

The resin composition forming the first insulating layer 21 has a lower-limit resin content of preferably 50 mass% or more, more preferably 60 mass% or more, and has an upper-limit resin content of preferably 97 mass% or less, more preferably 90 mass% or less, further preferably 85 mass% or less.

The resin composition forming the first insulating layer 21 has a lower-limit metal oxide content of preferably 3 mass% or more, more preferably 10 mass% or more, further preferably 15 mass% or more, and has an upper-limit metal oxide content of preferably 50 mass% or less, more preferably 40 mass% or less.

The resin composition forming the first insulating layer 21 has, as a ratio (mass ratio) between the resin and the metal oxide, a ratio of the metal oxide to the resin (100 parts by mass) of preferably 1 to 100 parts by mass, more preferably 2 to 50 parts by mass, further preferably 3 to 40 parts by mass.

From the viewpoint of the laminate further suitably exhibiting the effects of the present invention, the first insulating layer 21 has a thickness of preferably 3 µm or more, more preferably 5 µm or more, further preferably 10 µm or more, further preferably 20 µm or more. The upper limit of the thickness of the first insulating layer 21 is preferably 70 µm or less, more preferably 50 µm or less. Preferable ranges of the thickness of the first insulating layer 21 include 3 to 70 µm, 3 to 50 µm, 5 to 70 µm, 5 to 50 µm, 10 to 70 µm, 10 to 50 µm, 20 to 70 µm, and 20 to 50 µm.

The second insulating layer 22 is formed of a resin composition containing a metal oxide hydrate. From the viewpoint of the laminate suitably exhibiting the effects of the present invention, the metal oxide hydrate is preferably hydrated alumina. Examples of the hydrated alumina include trihydroxide (Al(OH)₃), and two variants of aluminum oxide hydroxide (AlO(OH)), e.g., boehmite (γ-aluminum oxide hydroxide) and diaspore (α-aluminum oxide hydroxide). Boehmite has categories of pseudocrystalline boehmite and micro-crystalline boehmite, both of which can be used in the present invention without limitation. These metal oxide hydrates may be used one kind or two or more kinds thereof. The metal oxide contained in the first insulating layer 21 may be one kind of metal oxide or two or more kinds of metal oxides.

The metal oxide hydrate is preferably in the form of particles, and the particle size of the metal oxide hydrate particles is preferably 100 nm or less, more preferably 80 nm or less, further preferably 50 nm or less. The lower limit of the particle size of the metal oxide hydrate particles is, for example, 5 nm or more. Preferable ranges of the particle size of the metal oxide hydrate particles include 5 to 100 nm, 5 to 80 nm, and 5 to 50 nm. The shape of the metal oxide hydrate is not particularly limited, but is, for easy formation of an inorganic insulating layer, preferably flattened fine particles having a large aspect ratio (one side/thickness), preferably having an aspect ratio of 4 to 200.

A resin contained in the resin composition forming the second insulating layer 22 is preferably a heat resistant resin. That is, the second insulating layer 22 is, similarly to the first insulating layer 21, suitably formed by applying and baking an insulating paint (the resin composition containing a metal oxide hydrate) used for forming the second insulating layer 22, and therefore the resin is desired to have excellent heat resistance. Any resin having excellent heat resistance may be used as the heat resistant resin, and a known resin used in a known insulated electric wire and the like can be used. Specific examples of the heat resistant resin include a formal resin, polyurethane, an epoxy resin, polyester, a polyamide, polyester imide, polyether imide, a polyamide-imide, a polyimide, and precursors thereof. Among these examples, polyester imide, a polyamide-imide, or a polyimide is preferably used from the viewpoint of further increasing the heat resistance. The resin contained in the second insulating layer 22 may be one kind of resin or two or more kinds of resins.

The resin composition forming the second insulating layer 22 has a lower-limit resin content of preferably 50 mass% or more, more preferably 60 mass% or more, and has an upper-limit resin content of preferably 97 mass% or less, more preferably 90 mass% or less, further preferably 85 mass% or less.

The resin composition forming the second insulating layer 22 has a lower-limit metal oxide hydrate content of preferably 3 mass% or more, more preferably 10 mass% or more, further preferably 15 mass% or more, and has an upper-limit metal oxide hydrate content of preferably 50 mass% or less, more preferably 40 mass% or less.

The resin composition forming the second insulating layer 22 has, as a ratio (mass ratio) between the resin and the metal oxide hydrate, a ratio of the metal oxide to the resin (100 parts by mass) of preferably 1 to 100 parts by mass, more preferably 2 to 50 parts by mass, further preferably 3 to 40 parts by mass.

From the viewpoint of the laminate further suitably exhibiting the effects of the present invention, the second insulating layer 22 has a thickness of preferably 3 µm or more, more preferably 5 µm or more, further preferably 8 µm or more. The upper limit of the thickness of the second insulating layer 22 is preferably 50 µm or less, more preferably 30 µm or less. Preferable ranges of the thickness of the second insulating layer 22 include 3 to 50 µm, 3 to 30 µm, 5 to 50 µm, 5 to 30 µm, 8 to 50 µm, and 8 to 30 µm.

When insulating paints described later for forming the first insulating layer 21 and the second insulating layer 22 are prepared, the resin, the metal oxide, and the metal oxide hydrate may each be used in the form of dissolution or dispersion in a solvent (resin varnish or the like).

When insulating paints described later for forming the first insulating layer 21 and the second insulating layer 22 are prepared, the first insulating layer 21 and the second insulating layer 22 are preferably formed by dissolving or dispersing the resin and dispersing the metal oxide or the metal oxide hydrate in a solvent to prepare an insulating paint, and applying and baking this insulating paint. As the solvent for dissolving or dispersing the resin and suitably dispersing the metal oxide or the metal oxide hydrate, mainly and suitably used is a high-boiling-point solvent such as a cresolbased phenol, an aromatic alcohol, NMP (N-methyl-2-pyrrolidone), DMAC (N,N-dimethylacetamide), DMF (N,N-dimethylformamide), DMI (1,3-dimethyl-2-imidazolidinone), a carbonate-based solvent, a lactone-based solvent, and a glycol ether-based solvent. The insulating paint may contain a small amount of an acid component or an alkali component to stabilize the dispersion. Similarly, the insulating paint may also contain water, a low-boiling-point alcohol, a low-viscosity solvent contributing to reducing the viscosity of the insulating paint, or the like. The insulating paint may, as necessary, be mixed with a sol of another metal oxide, or may contain a dispersant or a surface-treating agent added to impart hydrophobicity or improve dispersibility.

As described above, in the laminate 1 according to the present invention, the insulating coating 20 may be formed only of the first insulating layer 21 and the second insulating layer 22 or may further include another layer. The other layer is not particularly limited as long as it is an insulating layer, and examples of the other layer include an organic insulating layer. The organic insulating layer is preferably formed of the heat resistant resin described above. That is, specific examples of the heat resistant resin of the organic insulating layer include a formal resin, polyurethane, an epoxy resin, polyester, a polyamide, polyester imide, polyether imide, a polyamide-imide, a polyimide, and precursors thereof. Among these examples, polyester imide, a polyamide-imide, or a polyimide is preferably used from the viewpoint of further increasing the heat resistance. The heat resistant resin contained in the organic insulating layer may be one kind of heat resistant resin or two or more kinds of heat resistant resins.

When the laminate 1 according to the present invention includes the organic insulating layer, the organic insulating layer has a thickness of preferably 5 µm or more, more preferably 10 µm or more, further preferably 20 µm or more, from the viewpoint of the laminate further suitably exhibiting the effects of the present invention. The upper limit of the thickness of the organic insulating layer is preferably 200 µm or less. Preferable ranges of the thickness of the organic insulating layer include 5 to 200 µm, 10 to 200 µm, and 20 to 200 µm. When the organic insulating layer includes two or more layers, the thickness of each of the organic insulating layers preferably satisfies these ranges.

From the viewpoint of the laminate further suitably exhibiting the effects of the present invention, the insulating coating 20 of the laminate 1 according to the present invention has a total thickness of preferably 6 µm or more, more preferably 10 µm or more, further preferably 15 µm or more. The upper limit of the total thickness of the insulating coating 20 is preferably 300 µm or less. Preferable ranges of the total thickness of the insulating coating 20 include 6 to 300 µm, 10 to 300 µm, and 15 to 300 µm.

By the laminate according to the present invention being exposed to partial discharge generated by an inverter surge, an inorganic insulating layer is formed at part of the insulating coating 20. Also in Patent Document 2, a thin inorganic insulating layer having a thickness of approximately 100 nm is formed due to the partial discharge, and this thin inorganic insulating layer contributes to exertion of increasing electrical insulation lifetime. However, since the inorganic insulating layer formed in Patent Document 2 is thin, having a thickness of approximately 100 nm, application of higher voltage cannot be withstood only with this inorganic insulating layer and partial-discharge degradation is developed in the approximately 100-nm-thick inorganic insulating layer. In contrast, the laminate 1 according to the present invention is considered to exert a remarkable increase of lifetime because the first insulating layer 21 formed of a resin composition containing a metal oxide is included under the second insulating layer 22 formed of a resin composition containing a metal oxide hydrate, and a metal oxide deposited due to partial-discharge degradation of the first insulating layer 21 adheres to the second-insulating-layer-22 side to form a stronger inorganic insulating layer. This partial discharge is formed, for example, at a frequency of 1 kHz to 100 kHz and a voltage of 600 V to 3 kV.

The laminate 1 according to the present invention can be produced by layering on the conductor 10 a layer forming the insulating coating 20. The laminate can be produced, for example, by applying onto the conductor 10 a resin composition for forming the insulating coating 20 (that is, the first insulating layer 21, the second insulating layer, and the other layer disposed as necessary) and baking the conductor. Alternatively, an insulated electric wire can be produced by winding around the conductor 10 an insulating film formed from a resin composition for forming the insulating coating 20. The insulating film can be formed, for example, by forming a resin composition (insulating paint) for forming the insulating coating 20 into a film with a film coater or the like and baking the film. The difference between these methods for producing an insulated electric wire is whether the insulating coating 20 is formed on the conductor, or the insulating film is formed singly and then wound around on the conductor 10. The insulating film equals the insulating coating 20 in the form of a film.

Examples of the method for applying an insulating paint include an application method with a coater, a method for obtaining a coating with a prescribed thickness by repeating application with a dip coater or a die and drying, and paint application with a spray, and the method for applying an insulating paint is not particularly limited. Baking can be performed, for example, by heating at a high temperature (for example, 300°C or more) for a prescribed time. Further, the insulating coating 20 can be formed by repeating a set of operations, i.e., application and heating, a plurality of times until the insulating coating 20 has a prescribed thickness. In the formation of the second insulating layer 22, the baking temperature and time are set according to the type of the metal oxide hydrate so as not to transform by heat the metal oxide hydrate into a different metal oxide hydrate or a metal oxide.

The laminate 1, according to the present invention, in the form of, for example, an insulated electric wire can be produced by applying an insulating paint to the surface of the conductor 10 and baking the conductor. The insulating coating 20 can be formed by repeating a set of operations (application and heating) of applying an insulating paint onto the conductor 10 at a prescribed thickness and heating the conductor at a high temperature (for example, 300 to 500°C or more) for a prescribed time (for example, 1 to 2 minutes) a plurality of times (for example, 10 to 20 times) until the insulating coating 20 has a prescribed thickness.

A coil according to the present invention can be formed by winding the insulated electric wire around a core. A rotary electric machine according to the present invention includes the coil according to the present invention as a motor or the like. That is, the rotary electric machine according to the present invention may be a rotary electric machine produced using the insulated electric wire according to the present invention, or a rotary electric machine formed using the conductor 10, on the surface of which the insulating coating 20 is formed thereafter to form an electric wire.

Examples of the rotary electric machine include a motor and a generator.

### EXAMPLES

Hereinafter, the present invention is further specifically described by way of examples. The present invention, however, is not limited at all to these examples.

The polyimide paint, the polyamide-imide paint, and the polyester imide paint used in the examples and comparative examples are as follows.

### (Polyimide paint)

Into a 10-L four-neck flask equipped with a stirrer and a thermometer, 400.5 g of 4,4'-diaminodiphenylether and 3780 g of NMP were charged and heated to 40°C under stirring in nitrogen to dissolve the 4,4'-diaminodiphenylether. Next, 425.2 g of pyromellitic anhydride were gradually added to the solution. After the completion of the addition, the solution was stirred for 1 hour to give a polyimide paint in which an aromatic polyamide acid was dissolved at a concentration of 17.9 mass%.

### (Polyamide-imide paint)

Into a 10-L four-neck flask equipped with a stirrer and a thermometer, 192.1 g of trimellitic anhydride, 255.3 g of 4,4'-diphenylmethane diisocyanate, and 1210 g of NMP were charged and heated to 160°C under stirring in nitrogen, and stirred for 1 hour. Next, 2 g of methanol were added to terminate the reaction and the reaction product was cooled to give a polyamide-imide paint having a dissolution concentration of 25.1 mass%.

### (Polyester imide paint)

Neoheat 8600 manufactured by TOTOKU TORYO CO., LTD. was used.

### [Insulating paints containing metal oxide]

Insulating paints each having the composition shown in Table 1 were prepared by the procedures indicated in following Production Examples 1 to 6.

### <Production Example 1>

An NMP dispersion silica sol (average particle size 12 nm) was mixed in the polyimide paint at a silica content of 5 parts by mass relative to 100 parts by mass of the resin content of the polyimide paint, and uniformly dispersed to give an insulating paint 1.

### <Production Example 2>

An NMP dispersion silica sol (average particle size 12 nm) was mixed in the polyimide paint at a silica content of 30 parts by mass relative to 100 parts by mass of the resin content of the polyimide paint, and uniformly dispersed to give an insulating paint 2.

### <Production Example 3>

An NMP dispersion silica sol (average particle size 12 nm) was mixed in the polyamide-imide paint at a silica content of 5 parts by mass relative to 100 parts by mass of the resin content of the polyamide-imide paint, and uniformly dispersed to give an insulating paint 3.

### <Production Example 4>

An NMP dispersion silica sol (average particle size 12 nm) was mixed in the polyamide-imide paint at a silica content of 30 parts by mass relative to 100 parts by mass of the resin content of the polyamide-imide paint, and uniformly dispersed to give an insulating paint 4.

### <Production Example 5>

A benzyl alcohol/naphtha mixed solvent dispersion silica sol (average particle size 12 nm) was mixed in the polyester imide paint at a silica content of 5 parts by mass relative to 100 parts by mass of the resin content of the polyester imide paint, and uniformly dispersed to give an insulating paint 5.

### <Production Example 6>

A benzyl alcohol/naphtha mixed solvent dispersion silica sol (average particle size 12 nm) was mixed in the polyester imide paint at a silica content of 30 parts by mass relative to 100 parts by mass of the resin content of the polyester imide paint, and uniformly dispersed to give an insulating paint 6.

### [Insulating paints containing metal oxide hydrate]

Insulating paints each having the composition shown in Table 1 were prepared by the procedures indicated in following Production Examples 7 to 10.

### <Production Example 7>

An NMP dispersion boehmite sol (alumina sol A1-10 manufactured by Kawaken Fine Chemicals Co., Ltd., average particle size 30 nm) was mixed in the polyimide paint at a boehmite content of 5 parts by mass relative to 100 parts by mass of the resin content of the polyimide paint, and uniformly dispersed to give an insulating paint 7.

### <Production Example 8>

An NMP dispersion boehmite sol (alumina sol A1-10 manufactured by Kawaken Fine Chemicals Co., Ltd., average particle size 30 nm) was mixed in the polyimide paint at a boehmite content of 30 parts by mass relative to 100 parts by mass of the resin content of the polyimide paint, and uniformly dispersed to give an insulating paint 8.

### <Production Example 9>

An NMP dispersion boehmite sol (alumina sol A1-10 manufactured by Kawaken Fine Chemicals Co., Ltd., average particle size 30 nm) was mixed in the polyamide-imide paint at a boehmite content of 5 parts by mass relative to 100 parts by mass of the resin content of the polyamide-imide paint, and uniformly dispersed to give an insulating paint 9.

### <Production Example 10>

An NMP dispersion boehmite sol (alumina sol A1-10 manufactured by Kawaken Fine Chemicals Co., Ltd., average particle size 30 nm) was mixed in the polyamide-imide paint at a boehmite content of 30 parts by mass relative to 100 parts by mass of the resin content of the polyamide-imide paint, and uniformly dispersed to give an insulating paint 10.

### [Production of insulated electric wires]

Insulated electric wires were prepared by the procedures indicated in following Examples 1 to 6 and Comparative Examples 1 to 8. Table 2 shows the layering structures of the insulating coatings.

### (Example 1)

The insulating paint 5 was repetitively applied onto a copper conductor (copper wire having a diameter of about 1 mm (conductor diameter is shown in Table 2)) and baked to form a 30-µm-thick insulating layer. Further, the insulating paint 9 was repetitively applied thereonto and baked to form an 8-µm-thick insulating layer, and an insulated electric wire that included an insulating coating having a two-layer structure was obtained.

### (Example 2)

The polyester imide paint was repetitively applied onto the same copper conductor as the copper conductor used in Example 1 and baked to form a 28-µm-thick insulating layer. The insulating paint 6 was repetitively applied thereonto and baked to form a 4-µm-thick insulating layer. The insulating paint 10 was repetitively applied thereonto and baked to form a 3-µm-thick insulating layer. Further, the polyamide-imide paint was repetitively applied thereonto and baked to form a 3-µm-thick insulating layer, and an insulated electric wire that included an insulating coating having a four-layer structure was obtained.

### (Example 3)

The insulating paint 3 was repetitively applied onto the same copper conductor as the copper conductor used in Example 1 and baked to form a 30-µm-thick insulating layer. Further, the insulating paint 9 was repetitively applied thereonto and baked to form an 8-µm-thick insulating layer, and an insulated electric wire that included an insulating coating having a two-layer structure was obtained.

### (Example 4)

The polyamide-imide paint was repetitively applied onto the same copper conductor as the copper conductor used in Example 1 and baked to form a 31-µm-thick insulating layer. The insulating paint 4 was repetitively applied thereonto and baked to form a 4-µm-thick insulating layer. Further, the insulating paint 10 was repetitively applied thereonto and baked to form a 3-µm-thick insulating layer, and an insulated electric wire that included an insulating coating having a three-layer structure was obtained.

### (Example 5)

The insulating paint 1 was repetitively applied onto the same copper conductor as the copper conductor used in Example 1 and baked to form a 30-µm-thick insulating layer. Further, the insulating paint 7 was repetitively applied thereonto and baked to form an 8-µm-thick insulating layer, and an insulated electric wire that included an insulating coating having a two-layer structure was obtained.

### (Example 6)

The polyimide paint was repetitively applied onto the same copper conductor as the copper conductor used in Example 1 and baked to form a 28-µm-thick insulating layer. The insulating paint 2 was repetitively applied thereonto and baked to form a 4-µm-thick insulating layer. The insulating paint 8 was repetitively applied thereonto and baked to form a 3-µm-thick insulating layer. Further, the polyamide-imide paint was repetitively applied thereonto and baked to form a 3-µm-thick insulating layer, and an insulated electric wire that included an insulating coating having a four-layer structure was obtained.

### (Comparative Example 1)

The insulating paint 6 was repetitively applied onto the same copper conductor as the copper conductor used in Example 1 and baked to form a 30-µm-thick insulating layer. The polyamide-imide paint was repetitively applied thereonto and baked to form an 8-µm-thick insulating layer, and an insulated electric wire that included an insulating coating having a two-layer structure was obtained.

### (Comparative Example 2)

The insulating paint 4 was repetitively applied onto the same copper conductor as the copper conductor used in Example 1 and baked to form a 30-µm-thick insulating layer. Further, the polyamide-imide paint was repetitively applied thereonto and baked to form an 8-µm-thick insulating layer, and an insulated electric wire that included an insulating coating having a two-layer structure was obtained.

### (Comparative Example 3)

The insulating paint 2 was repetitively applied onto the same copper conductor as the copper conductor used in Example 1 and baked to form a 38-µm-thick insulating layer, and an insulated electric wire that included an insulating coating having a one-layer structure was obtained.

### (Comparative Example 4)

The insulating paint 10 was repetitively applied onto the same copper conductor as the copper conductor used in Example 1 and baked to form a 30-µm-thick insulating layer. Further, the polyamide-imide paint was repetitively applied thereonto and baked to form an 8-µm-thick insulating layer, and an insulated electric wire that included an insulating coating having a two-layer structure was obtained.

### (Comparative Example 5)

The insulating paint 8 was repetitively applied onto the same copper conductor as the copper conductor used in Example 1 and baked to form a 38-µm-thick insulating layer, and an insulated electric wire that included an insulating coating having a one-layer structure was obtained.

### (Comparative Example 6)

The polyamide-imide paint was repetitively applied onto the same copper conductor as the copper conductor used in Example 1 and baked to form a 31-µm-thick insulating layer. The insulating paint 10 was repetitively applied thereonto and baked to form a 3-µm-thick insulating layer. Further, the insulating paint 4 was repetitively applied thereonto and baked to form a 4-µm-thick insulating layer, and an insulated electric wire that included an insulating coating having a three-layer structure was obtained.

### (Comparative Example 7)

The polyamide-imide paint was repetitively applied onto the same copper conductor as the copper conductor used in Example 1 and baked to form a 38-µm-thick insulating layer, and an insulated electric wire that included an insulating coating having a one-layer structure was obtained.

### (Comparative Example 8)

The polyimide paint was repetitively applied onto the same copper conductor as the copper conductor used in Example 1 and baked to form a 38-µm-thick insulating layer, and an insulated electric wire that included an insulating coating having a one-layer structure was obtained.

### [Evaluation of characteristics of insulated electric wires]

The insulated electric wires obtained in the examples and comparative examples were evaluated for the following characteristics. Tables 2 and 3 show the results.

### <Evaluation of flexibility>

For the flexibility of the insulated electric wires, a test was performed in accordance with the winding test of JIS C3216-5-1.

### <V-t characteristic test>

Using the insulated electric wires, twisted pair samples were prepared in accordance with JIS C 3216, and voltage was applied between the two wires. The voltage was applied by generating bipolar square waves at a pulse width of 5 µs and a frequency of 10 kHz, using inverter pulse generator PG-W03KP-A from Nissin Pulse Electronics Co., Ltd.

**[Table 1]**

| Table 1 | | | Production Example 1 | Production Example 2 | Production Example 3 | Production Example 4 | Production Example 5 | Production Example 6 | Production Example 7 | Production Example 8 | Production Example 9 | Production Example 10 |
|---|---|---|---|---|---|---|---|---|---|---|---|---|
| Paint number | | | Insulating paint 1 | Insulating paint 2 | Insulating paint 3 | Insulating paint 4 | Insulating paint 5 | Insulating paint 6 | Insulating paint 7 | Insulating paint 8 | Insulating paint 9 | Insulating paint 10 |
| Composition of insulating paint (parts by mass) | Resin | Polyester imide resin | - | - | - | - | 100 | 100 | - | - | - | - |
| | | Polyamide-imide resin | - | - | 100 | 100 | - | - | - | - | 100 | 100 |
| | | Polyimide resin | 100 | 100 | - | - | - | - | 100 | 100 | - | - |
| | Metal oxide hydrate | Boehmite (Average particle size 30 nm) NMP dispersion medium | - | - | - | - | - | - | 5 | 30 | 5 | 30 |
| | Metal oxide | Silica fine particles (Average particle size 12 nm) NMP dispersion medium | 5 | 30 | 5 | 30 | - | - | - | - | - | - |
| | | Silica fine particles (Average particle size 12 nm) Benzyl alcohol/naphtha mixed dispersion medium | - | - | - | - | 5 | 30 | - | - | - | - |

**[Table 2]**

| Table 2 | | | | Example 1 | Example 2 | Example 3 | Example 4 | Example 5 | Example 6 |
|---|---|---|---|---|---|---|---|---|---|
| Layering structure of insulating coating (Used paint) | First layer, second layer, third layer, and fourth layer in this order from conductor side | First layer (Conductor side) | | Insulating paint 5 | Polyester imide paint | Insulating paint 3 | Polyamide-imide paint | Insulating paint 1 | Polyimide paint |
| | | Second layer | | Insulating paint 9 | Insulating paint 6 | Insulating paint 9 | Insulating paint 4 | Insulating paint 7 | Insulating paint 2 |
| | | Third layer | | - | Insulating paint 10 | - | Insulating paint 10 | - | Insulating paint 8 |
| | | Fourth layer | | - | Polyamide-imide paint | - | - | - | Polyamide-imide paint |
| Insulated electric wire | Size | Conductor diameter (mm) | | 1.000 | 1.000 | 1.001 | 1.000 | 0.999 | 1.000 |
| | | Thickness (mm) | First layer | 0.030 | 0.028 | 0.030 | 0.031 | 0.030 | 0.028 |
| | | | Second layer | 0.008 | 0.004 | 0.008 | 0.004 | 0.009 | 0.004 |
| | | | Third layer | - | 0.003 | - | 0.003 | - | 0.003 |
| | | | Fourth layer | - | 0.003 | - | - | - | - |
| | | Outer diameter (mm) | | 1.076 | 1.076 | 1.077 | 1.076 | 1.077 | 1.076 |
| | Flexibility | Acceptable winding diameter (20% extension) | | 1d | 1d | 1d | 2d | 1d | 1d |
| | V-t characteristic (h) | 10 kHz, 2.5 kVp square waves | | 525.1 | 530.0 | 518.6 | 522.4 | 542.1 | 529.2 |
| | | 10 kHz, 2.0 kVp square waves | | 5000 < | 5000 < | 5000 < | 5000 < | 5000 < | 5000 < |

**[Table 3]**

| Table 3 | | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Layering structure of insulating coating (Used paint) | First layer, second layer, third layer, and fourth layer in this order from conductor side | First layer (Conductor side) | | Insulating paint 6 | Insulating paint 4 | Insulating paint 2 | Insulating paint 10 | Insulating paint 8 | Polyamide-imide paint | Polyamide-imide paint | Polyimide paint |
| | | Second layer | | Polyamide-imide paint | Polyamide-imide paint | - | Polyamide-imide paint | - | Insulating paint 10 | - | - |
| | | Third layer | | - | - | - | - | - | Insulating paint 4 | - | - |
| | | Fourth layer | | - | - | - | - | - | . | - | - |
| Insulated electric wire | Size | Conductor diameter (mm) | | 1.000 | 1.001 | 1.000 | 0.999 | 1.000 | 1.000 | 1.001 | 1.000 |
| | | Thickness (mm) | First layer | 0.030 | 0.030 | 0.038 | 0.030 | 0.038 | 0.031 | 0.037 | 0.038 |
| | | | Second layer | 0.008 | 0.008 | - | 0.008 | - | 0.003 | - | - |
| | | | Third layer | - | - | - | - | . | 0.004 | - | - |
| | | | Fourth layer | - | - | - | - | . | - | - | - |
| | | Outer diameter (mm) | | 1.076 | 1.077 | 1.076 | 1.075 | 1.076 | 1.076 | 1.075 | 1.076 |
| | Flexibility | Acceptable winding diameter (20% extension) | | 3d | 2d | 2d | 2d | 2d | 3d | 1d | 1d |
| | V-t characteristic (h) | 10 kHz, 2.5 kVp square waves | | 6.4 | 5.6 | 22.7 | 35.5 | 41.5 | 40.9 | 0.18 | 0.26 |
| | | 10 kHz, 2.0 kVp square waves | | 18.6 | 17.5 | 46.6 | 488.5 | 688.7 | 604.1 | 0.49 | 0.54 |

The insulated electric wires according to Examples 1 to 6 are laminates including a conductor and an insulating coating formed on the conductor, the insulating coating including at least a first insulating layer and a second insulating layer in this order from a conductor side, the first insulating layer being formed of a resin composition containing a metal oxide, and the second insulating layer being formed of a resin composition containing a metal oxide hydrate. The insulated electric wires according to Examples 1 to 6 exhibited a very good electrical insulation lifetime characteristic.

In contrast, Comparative Examples 1 to 3 include an insulating coating containing no metal oxide hydrate but containing a metal oxide; Comparative Examples 4 and 5 include an insulating coating containing no metal oxide but containing a metal oxide hydrate; and Comparative Examples 7 and 8 include an insulating coating containing neither a metal oxide nor a metal oxide hydrate and including only an organic insulating layer. Comparative Examples 1 to 5 exhibited a very good V-t characteristic compared with Comparative Examples 7 and 8, but had about 1/10 the electrical insulation lifetime of Examples 1 to 6.

Inversely with Example 4, the insulating coating of Comparative Example 6 includes, in the order from the conductor side, the second insulating layer formed of a resin composition (insulating paint 10) containing a metal oxide hydrate, and the first insulating layer formed of a resin composition (insulating paint 4) containing a metal oxide. When Example 4 is compared with Comparative Example 6, the difference in electrical insulation lifetime therebetween is 10 times and this fact clarifies that by layering the first insulating layer containing a metal oxide on the conductor side and the second insulating layer containing a metal oxide hydrate on the surface side, the electrical insulation lifetime is increased.

### DESCRIPTION OF REFERENCE SIGNS

1: Laminate
10: Conductor
20: Insulating coating
21: First insulating layer
22: Second insulating layer
23: Third insulating layer
24: Fourth insulating layer

## Claims

1. A laminate comprising: at least a conductor; and an insulating coating formed on the conductor,
the insulating coating including at least a first insulating layer and a second insulating layer in this order from a conductor side,
the first insulating layer being formed of a resin composition containing a metal oxide, and
the second insulating layer being formed of a resin composition containing a metal oxide hydrate.

2. The laminate according to claim 1, wherein the metal oxide hydrate contains hydrated alumina.

3. The laminate according to claim 1 or 2, wherein the first insulating layer and the second insulating layer are in contact with each other.

4. The laminate according to any one of claims 1 to 3, wherein a resin contained in the resin composition forming the first insulating layer is at least one selected from the group consisting of a formal resin, polyurethane, an epoxy resin, polyester, polyester imide, polyether imide, a polyamide-imide, a polyimide, and precursors thereof.

5. The laminate according to any one of claims 1 to 4, wherein a resin contained in the resin composition forming the second insulating layer is at least one selected from the group consisting of a formal resin, polyurethane, an epoxy resin, polyester, polyester imide, polyether imide, a polyamide-imide, a polyimide, and precursors thereof.

6. The laminate according to any one of claims 1 to 5, wherein the insulating coating further includes an organic insulating layer.

7. The laminate according to any one of claims 1 to 6, being in a form of an insulated electric wire or a film.

8. A coil comprising the insulated electric wire according to claim 7.

9. A rotary electric machine comprising the insulated electric wire according to claim 7.
